# EUROPEAN PATENT SPECIFICATION

(11) **EP 3 922 394 B1**
(45) Date of publication and mention of the grant of the patent: **22.11.2023**
(21) Application number: 20848578.9
(22) Date of filing: 30.07.2020
(51) Int. Cl.: B23K 31/12, B23K 11/00, B23K 11/11, B23K 11/18, H01M 10/42, H01M 50/107, H01M 50/119, H01M 50/159, H01M 50/169, G01N 27/90, B23K 101/36, B23K 103/10

(54) **METHOD FOR EVALUATING RESISTANCE WELDING QUALITY OF BATTERY BY USING EDDY CURRENT SIGNAL CHARACTERISTICS**
VERFAHREN ZUR BEWERTUNG DER WIDERSTANDSSCHWEISSQUALITÄT EINER BATTERIE UNTER VERWENDUNG VON WIRBELSTROMSIGNALEIGENSCHAFTEN
PROCÉDÉ D'ÉVALUATION DE LA QUALITÉ DE SOUDAGE PAR RÉSISTANCE D'UNE BATTERIE EN UTILISANT DES CARACTÉRISTIQUES DE SIGNAL DE COURANT DE FOUCAULT

(30) Priority: 30.07.2019 KR 20190092629
(43) Date of publication of application: 15.12.2021
(73) Proprietor: LG Energy Solution, Ltd., Seoul 07335 (KR)
(72) Inventor: KOO, Sang Hyun, Daejeon 34122 (KR); KIM, Seok Jin, Daejeon 34122 (KR); JUNG, Su Taek, Daejeon 34122 (KR); LEE, Jung Hoon, Daejeon 34122 (KR)
(74) Representative: Plasseraud IP
(86) International application number: PCT/KR2020/010048
(87) International publication number: WO 2021/020892

(56) References cited:
- JP-A- H1 194 803
- JP-A- 2001 324 479
- JP-A- 2009 252 644
- JP-A- 2011 034 731
- JP-A- 2019 060 724
- KR-A- 20170 074 086
- KR-A- 20170 110 331
- US-A1- 2017 322 168
- RUDLIN JOHN ET AL: "Inspection of laser welded electrical connections for car batteries using eddy currents", INSPECTION OF LASER WELDED ELECTRICAL CONNECTIONS FOR CAR BATTERIES USING EDDY CURRENTS, [Online] 10 October 2014 (2014-10-10), pages 1-9, XP055901266, Retrieved from the Internet: URL:https://www.ndt.net/events/ECNDT2014/a pp/content/Paper/54_Rudlin.pdf> [retrieved on 2022-03-15]

## Description

### [Technical Field]

This application claims the benefit of priority based on Korean Patent Application No. 10-2019-0092629, filed on July 30, 2019.

The present invention relates to a method of evaluating the resistance welding quality of a battery, and more particularly, to a method of evaluating the resistance welding quality of a battery using eddy current signal characteristics.

### [Background Art]

As the price of energy sources increases due to the depletion of fossil fuels, and interest in environmental pollution is amplified, the demand for eco-friendly alternative energy sources is increasing. In particular, conventional automobiles using fossil fuels emit pollutants, which act as a major cause of environmental pollution.

Recently, secondary batteries capable of charging and discharging have been widely used as energy sources of wireless mobile devices. In addition, the secondary battery has attracted attention as a power source of an electric vehicle (EV), a hybrid electric vehicle (HEV), etc., which are proposed as a solution for air pollution of existing gasoline vehicles and diesel vehicles using fossil fuel.

As the demand for secondary batteries increases, the importance of evaluating the quality of batteries before the product is released is also increasing. In particular, in the case of a battery in which a battery tab is formed by welding, the defective rate at the welding portion is relatively high. For example, a cylindrical battery has a structure in which a battery cell is wrapped with a metal case, and a battery tab is formed at one end of the cylindrical structure by resistance welding. However, individual physical properties of the metal case or changes in physical properties caused during the welding process cause errors in the evaluation of the battery quality and deteriorate the reliability of the evaluation.

Therefore, there is a high need for a reliable quality evaluation method capable of preventing errors due to differences in physical properties for each metal case while the evaluation process is simple.

JP 2011 034731 discloses a method for inspecting welds in batteries. KR20170110331A discloses a method of inspecting weld quality in cylindrical batteries.

### [Disclosure]

### [Technical Problem]

The present invention has been invented to solve the above problems, and an object of the present invention is to provide a method of evaluating the quality of resistance welding of a battery using eddy current signal characteristics.

### [Technical Solution]

The invention is defined as per the pending set of claims. According to claim 1, the invention is a method of evaluating a resistance welding quality for a battery including a resistance-welded welding portion, that includes:
measuring an eddy current signal along a line connecting an opposite end via a welding portion at one end of one plane including the welding portion, on the plane;
analyzing the measured eddy current signal; and
determining a resistance welding quality by comparing an eddy current signal value at the welding portion with an eddy current signal value at a point other than the welding portion.

According to an embodiment of the present invention, the welding portion is a point where a battery tab is joined by resistance welding. According to a specific embodiment of the present invention, the measuring the eddy current signal is performed on a plane of one end of the cylindrical battery to which the battery tab is welded.

According to an embodiment of the present invention, the measuring the eddy current signal is performed on one plane where the battery tab is welded, and a line connecting an opposite end through the welding portion at one end of the plane is a straight line passing through the welding portion or a curved line in which both sides are symmetrical with respect to the welding portion.

According to an embodiment of the present invention, the measuring the eddy current signal is performed continuously or intermittently along a line connecting an opposite end via the welding portion at one end of the plane. In the invention, in the measuring the eddy current signal, both ends of the plane and the welding portion are included as a point to measure the eddy current signal.

A peak value of the eddy current signal measured at a point other than the welding portion is set as a reference value, a minimum value of the eddy current signal measured at the welding portion is set as a physical property value, and the determining the resistance welding quality includes calculating a difference between a reference value and the physical property value, and determining the resistance welding as being defective when the calculated value is outside a preset range.

In the invention, a battery to be evaluated is a cylindrical battery, and a reference value is an average value of respective peak values of the eddy current signal measured near both ends.

In the present invention, the cylindrical battery includes a case formed of aluminum or an alloy thereof.

According to an embodiment of the present invention, the measuring the eddy current signal is performed on a plane of one end where a battery tab has been welded in a cylindrical battery, and includes: a first measuring step of being performed on a first line passing through the welding portion; and a second measurement step of being performed on a second line that intersects the first line at the welding portion and does not overlap with the first line.

### [Advantageous Effects]

According to the method for evaluating the resistance welding quality of a battery according to the present invention, it is possible to provide high reliability by preventing errors due to differences in physical properties of each individual battery, and an evaluation process is simple by applying a non-destructive method.

### [Brief Description of the Drawings]

FIG. 1 is a photograph of a process of performing a method for evaluating the quality of resistance welding of a battery according to an embodiment of the present invention.
FIGS. 2 to 4 show results obtained by observing a cross section of a welding portion for each sample with an electron microscope after forming a battery tab by varying the welding strength at one end of each cylindrical battery.
FIG. 5 is a graph showing results of measuring eddy current signals for batteries in a state before attaching a battery tab.
FIGS. 6 and 7 are graphs showing results of measuring an eddy current signal of a battery by a method according to an embodiment of the present invention, respectively.
FIG. 8 is a graph showing a result of calculating a difference between a reference value and a physical property value for each battery sample.
FIG. 9 is a graph showing measurement results of physical properties for each battery sample.

### [Detailed Description of the Preferred Embodiments]

The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In the present invention, "welding" refers to a process of bonding two solid metals by applying heat and/or pressure to the two solid metals. In the present invention, "resistance welding" refers to a method of welding a welding portion using resistance heat generated from the metal itself by applying current and pressure to the welding portion, among various welding methods.

In the present invention, "eddy current" is a current in the form of a vortex generated in a conductor by electromagnetic induction when the magnetic field applied to the conductor changes over time. In addition, in the present invention, the "eddy current signal" refers to a signal according to a non-destructive testing method that generates eddy current in the tested part of a subject of inspection by passing high-frequency current through an excitation coil, and detects changes in the distribution state of eddy current due to defects.

The process of measuring the eddy current signal can be performed by a commonly known method. A brief description of the measurement principle is as follows. Assuming that the DC resistance, inductance, and frequency of the coil at the time of the air core are R0, L0, and ω, the impedance *Z* of the coil becomes as follows: *Z*=R₀+*ⱼωL*₀. When the excitation coil approaches the subject, the impedance of the excitation coil changes according to the magnetic permeability and conductivity of the subject. Since the impedance of the excitation coil can be normalized based on the reactance *ωL*₀ at the air core and expressed on the impedance plane as *R*/*ωL*₀ and *ωL*/*ωL*₀*,* the defect distribution state can be obtained from this impedance diagram. The process of measuring the eddy current signal can be performed using commercially available measurement equipment. For example, JAS-0100W of Jeongan Systems Co., Ltd. can be used.

The present invention provides a quality evaluation method for evaluating the quality of resistance welding for a battery including a resistance-welded welding portion.

The method of evaluating resistance welding quality of a battery according to the present invention includes:
a step of measuring an eddy current signal along a line connecting an opposite end via a welding portion at one end of one plane including the welding portion, on the plane; and
a step of analyzing the measured eddy current signal and determining a resistance welding quality by comparing an eddy current signal value at the welding portion with an eddy current signal value at a point other than the welding portion.

The evaluation method according to the present invention is differentiated from a method of measuring a signal value of a welding portion and simply comparing it with a preset reference value. In battery manufacturing, even if the same manufacturing process and battery case of the same material are applied, there is a difference in physical properties between individual battery cases. In addition, when welding is applied to the battery case, this causes a change in physical properties of the battery case. In particular, resistance welding generates resistance heat during the welding process and exhibits various thermal behaviors in individual welding processes. The difference in physical properties of the battery case and the thermal insulation during welding act as errors in the quality evaluation process. In the present invention, in the step of measuring the eddy current signal, the welding portion and the portion spaced apart from the welding portion are evaluated together. In the present invention, in the step of measuring the eddy current signal, the physical properties of the welding portion and the portion spaced apart from the welding portion are measured together, and the welding quality is evaluated from the difference between them. Therefore, the evaluation method according to the present invention has an effect of preventing errors due to such errors.

In one example, the welding portion is a point at which a battery tab is joined by resistance welding. The evaluation method according to the present invention can be applied as a method of evaluating the welding quality of a battery tab portion welded through a resistance welding process. For example, in the case of a cylindrical battery, a battery tab is formed in the central portion of one side cross section of the cylindrical battery case. Such a battery tab can be formed through a resistance welding process. Therefore, the evaluation method according to the present invention can be utilized as a method of evaluating the welding quality of a battery tab in a cylindrical battery.

In one example, the step of measuring the eddy current signal is performed on one plane to which the battery tab is welded. In addition, a line connecting the opposite end through the welding portion at one end of the plane is a straight line passing through the welding portion or a curved line in which both sides are symmetrical with respect to the welding portion. In this case, the step of measuring the eddy current signal may be performed along a straight line across the welding portion, or along a straight line or a curved line symmetrical with respect to the welding portion. This process is to continuously detect physical properties from one end to the opposite end through the welding portion on one plane of the battery.

As a specific example of the present invention, the battery to be evaluated is a cylindrical battery. In this case, the step of measuring the eddy current signal is performed on the plane of one end of the cylindrical battery to which the battery tab is welded. The cylindrical battery has a cylindrical body, and electrode tabs of a positive electrode or a negative electrode are formed at the centers of both ends of the cylindrical shape, respectively. In the present invention, when the battery to be evaluated is a cylindrical battery, the eddy current signal is measured on the plane of one end where the battery tab is welded.

For example, the step of measuring the eddy current signal may be performed continuously or intermittently along a line connecting the opposite end via the welding portion at one end of the plane. In the present invention, measuring the eddy current "continuously" means continuously measuring the eddy current without a separation distance between measurement points. In addition, measuring the eddy current "intermittently" means measuring the eddy current along a predetermined line with a spaced distance between measurement points.

In the step of measuring the eddy current signal, it is preferable to include both ends of the plane and a welding portion as a point for measuring the eddy current signal. In the case where the step of measuring the eddy current signal can be performed intermittently, one end as the starting point of the measurement, the welding portion as the center point, and the opposite end as the end point of the measurement are essential measurement points.

Specifically, in the method for evaluating the quality of resistance welding of a battery according to the present invention, the peak value of the eddy current signal measured at a point other than the welding portion is used as a reference value, and the minimum value of the eddy current signal measured at the welding portion is used as the physical property value. In addition, in the step of determining the resistance welding quality, a difference between the measured reference value and the physical property value is calculated, and based on this, whether or not the welding portion is defective is determined. If the difference between the calculated reference value and the physical property value is outside the preset range, it is determined as defective.

In one example, the battery to be evaluated of the present invention is a cylindrical battery, and the reference value is an average value of each peak value of the eddy current signal measured near both ends. In the case of a typical cylindrical battery, the signal at the welding portion becomes a physical property value, and the signal at both ends serves as a reference value. That is, in a cylindrical battery, the eddy current signal at the welding portion shows the lowest value, and the eddy current signal measured near both ends often shows a peak. At this time, the lowest value seen from the welding portion becomes the physical property value, and the average value of the peaks seen from both ends becomes the reference value.

For example, when the battery to be evaluated is a cylindrical battery, the cylindrical battery may have a structure having a case formed of aluminum or an alloy thereof. In this case, a battery tab made of the same material may be welded to a cylindrical case body made of aluminum or an alloy thereof. Or it includes the case where the battery tab is plated with nickel or an alloy thereof.

Further, in another example, a battery to be evaluated is a cylindrical battery, and the step of measuring the eddy current signal is performed on a plane of one end where a battery tab has been welded in a cylindrical battery, and includes: a first measuring step of being performed on a first line passing through the welding portion; and a second measurement step of being performed on a second line that intersects the first line at the welding portion and does not overlap with the first line. In this case, the eddy current signal is measured along two lines, and it is to increase the reliability of the evaluation through cross measurement. In the above example, the step of measuring the eddy current signal along the first and second lines is performed, but the present invention does not exclude the case of measuring the eddy current signal along two or more lines.

Hereinafter, specific examples of the present invention will be described in detail with reference to the accompanying embodiments and drawings. Accordingly, the embodiments described in the specification and the configurations described in the drawings are only the most preferred embodiments of the present invention, and do not represent all of the technical ideas of the present invention. It is to be understood that there may be various equivalents and variations in place of them at the time of filing the present application.

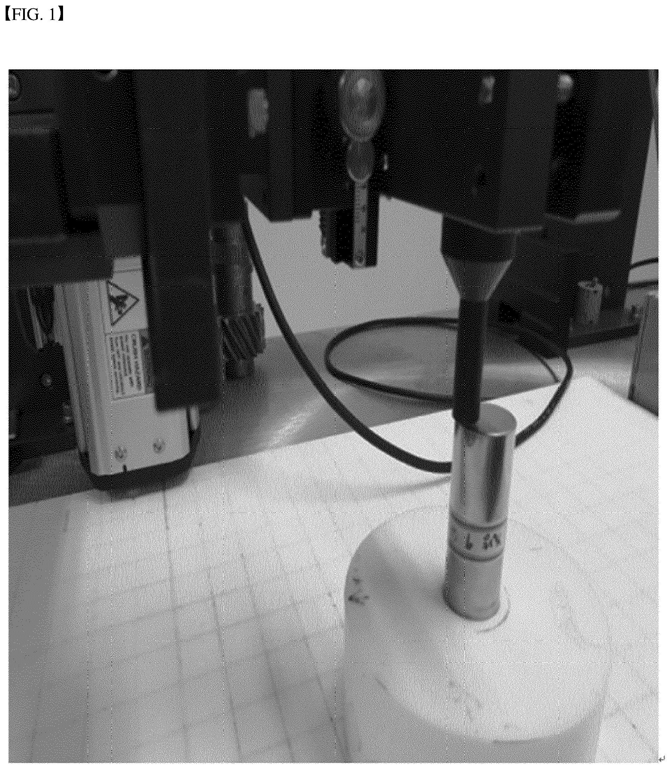

In this regard, FIG. 1 is a photograph of a process of performing a method for evaluating the quality of resistance welding of a battery according to an embodiment of the present invention. The battery to be evaluated is a cylindrical battery. With the cylindrical battery standing upright on the measuring table, the eddy current signal is measured for one end surface of the battery. Eddy current signal measurement is performed from one end of the upper end surface to the opposite end through the center.

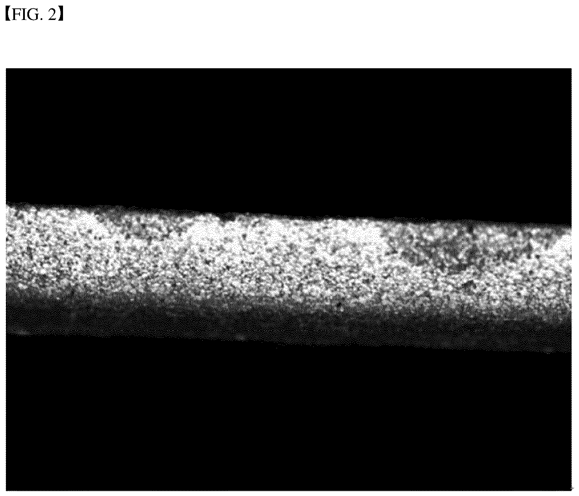

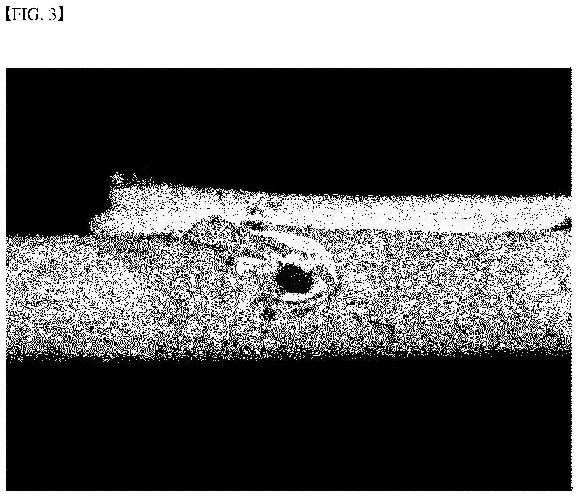

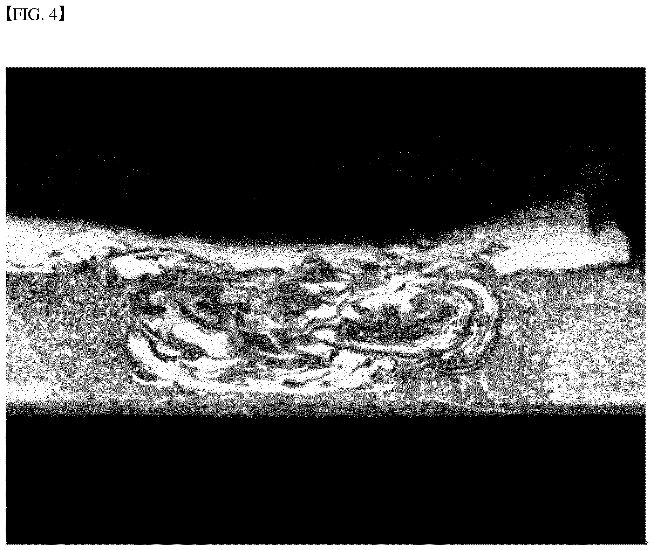

FIGS. 2 to 4 are results of welding battery tabs with different welding strengths, and observing a cross section of each welded sample with an electron microscope. FIG. 2 shows a case where the welding strength is weak, and a change in physical properties is hardly observed around the welding portion. On the other hand, FIG. 3 shows a case where the welding strength is appropriate, and changes in physical properties are observed around the welding portion. FIG. 4 shows a case in which the welding strength is excessive, and it can be seen that the periphery of the welding portion is excessively deformed. In this case, the cases of FIGS. 2 and 4 should be determined as defective products, and FIG. 3 should be determined as good products. Typically, in the case of welding a battery tab, when the welding strength is weak, a defect occurs in which the battery tab is separated or electrical connection is disconnected during use, and when the welding strength is excessive, process efficiency is degraded. However, in the battery to be evaluated, it is not easy to observe the cross section of the welding portion. Thus, the present invention proposes a method capable of effectively evaluating the quality of a welding portion in a non-destructive manner.

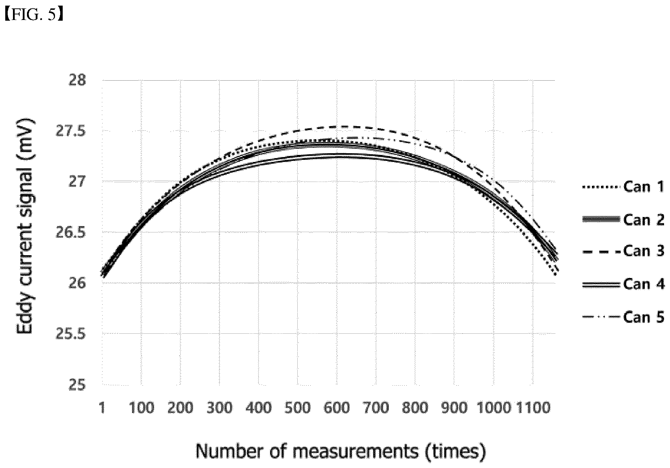

FIG. 5 is a graph showing results of measuring an eddy current signal for batteries that have not undergone a welding process for attaching a battery tab. Specifically, five cylindrical battery samples without a battery tab attached were randomly selected (cans 1 to 5), and an eddy current signal was measured for each battery sample. Referring to FIG. 5, although the selected battery samples were manufactured through the same manufacturing process, it can be seen that there is a data shift due to the difference in physical properties. Such data shift causes a decrease in the reliability of welding quality evaluation.

### Example: Performing resistance welding quality evaluation for each battery sample

Resistance welding was performed on a cylindrical battery sample having a case made of aluminum to attach a battery tab. At this time, the welding strength was different for each sample. Specifically, in Samples 1 to 3, resistance welding was performed at an appropriate level of welding strength, and in Samples 4 to 6, resistance welding was performed at a weak level of welding strength.

The eddy current signal value was measured for each sample. The eddy current signal value was measured continuously over 1000 times from the outer left area to the right with respect to the side where the battery tab is attached, and was performed using JAS-0100W equipment of Jeongan Systems.

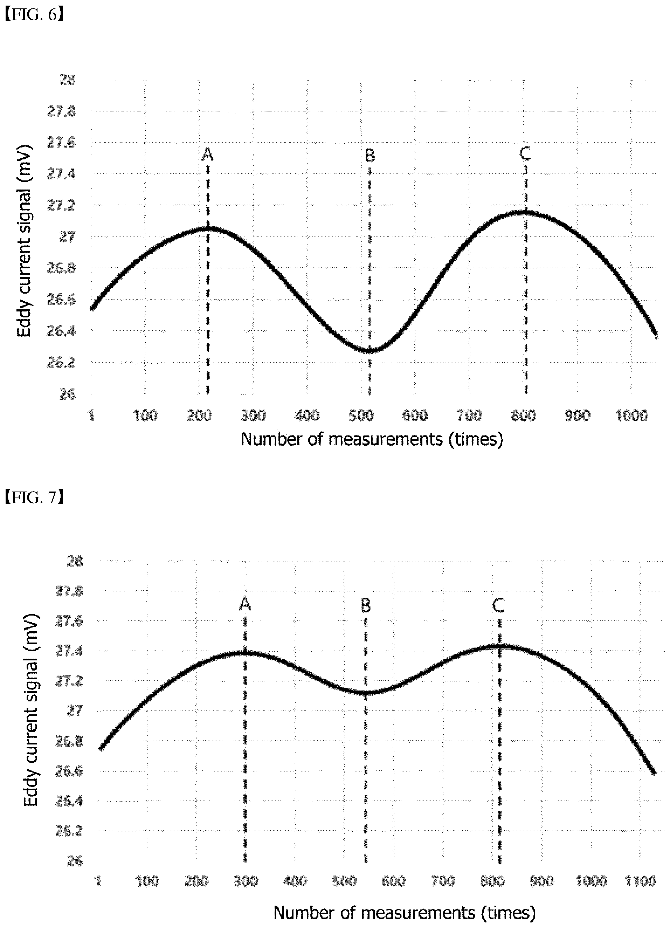

For example, the measurement result of the eddy current signal value for Sample 1 is shown in FIG. 6, and the measurement result of the eddy current signal value for Sample 4 is shown in FIG. 7. In FIGS. 6 and 7, A denotes the left end of the sample, B denotes the center point of the welding portion, and C denotes the right end of the sample. In the graphs showing the measurement results for Samples 1 to 6, it was confirmed that the values at the center were small and the values increased as the center went to the left and right. The measurement results for each sample are summarized in Table 1 below.

In Table 1, the value at the highest point on the left of the graph from the center point (B) is indicated as "left peak value", the value at the lowest point near the center point (B) is indicated as "minimum value of the welding portion", and the numerical value at the highest point on the right side of the graph from the center point (B) is indicated as "right peak value". It is shown in Table 1. In Table 1 below, the unit is mV.

**[Table 1]**

| Sample No. | Left peak value | Welding portion minimum value | Right peak value |
|---|---|---|---|
| Sample 1 | 27.3214 | 26.7256 | 27.2289 |
| Sample 2 | 27.2154 | 26.5283 | 27.2696 |
| Sample 3 | 27.3874 | 26.5384 | 27.2382 |
| Sample 4 | 27.1892 | 26.6803 | 26.9762 |
| Sample 5 | 27.3867 | 27.1334 | 27.4335 |
| Sample 6 | 27.3850 | 26.9509 | 27.3482 |

In the results of Table 1 above, the average value of the left and right peak values is calculated and displayed as a reference value, and the minimum value of the welding portion is expressed as a physical property value, as shown in Table 2 below.

**[Table 2]**

| Sample No. | Reference value | Physical property value | Difference |
|---|---|---|---|
| Sample 1 | 27.2752 | 26.7256 | 0.5496 |
| Sample 2 | 27.2425 | 26.5283 | 0.7142 |
| Sample 3 | 27.3128 | 26.5384 | 0.7744 |
| Sample 4 | 27.0827 | 26.6803 | 0.4024 |
| Sample 5 | 27.4101 | 27.1334 | 0.2767 |
| Sample 6 | 27.3666 | 26.9509 | 0.4157 |

Referring to Table 2, it can be seen that in the case of Samples 1 to 3, the difference between the reference value and the physical property value is 0.5 or more, and in the case of Samples 4 to 6, the difference is less than 0.5. In the present invention, based on the results of Table 2 above, Samples 1 to 3 are determined as normal products, and Samples 4 to 6 are determined as defective products.

However, if only the physical property values, which are the eddy current signal values at the welding part, are compared, it is not easy to determine whether the products are defective. Specifically, the physical property values of Samples 1 to 3 are between 26.5283 and 26.7256. On the other hand, the physical property value of Sample 4 was 26.6803, and the physical property value of Sample 6 was 26.5909. In comparison to the range of Samples 1 to 3, the physical property value of Sample 4 overlaps with the above range, and the physical property value of Sample 6 appears to be similar to the above range.

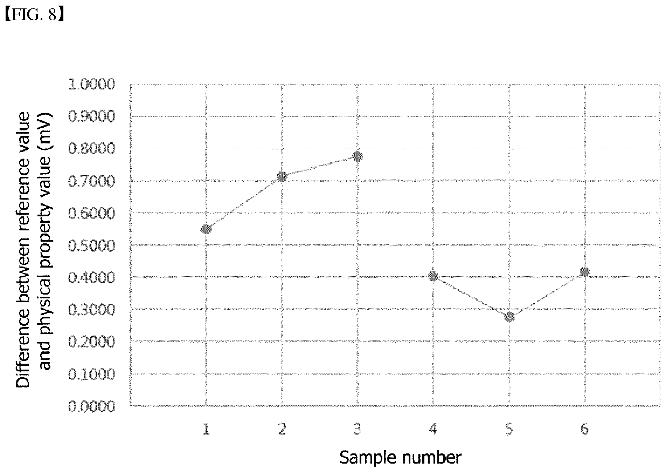

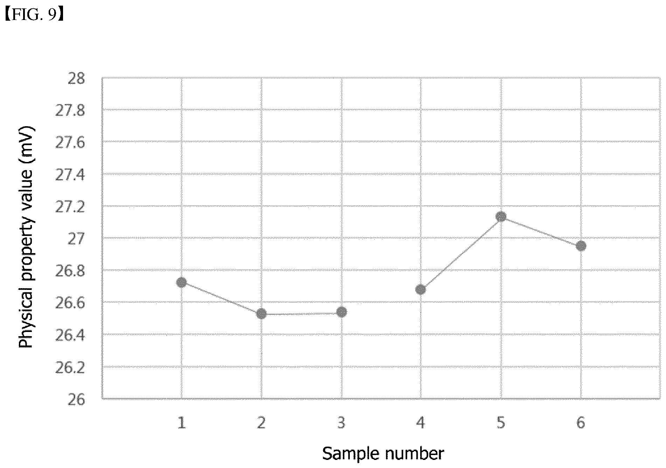

Specifically, FIG. 8 is a graph showing the result of calculating differences between reference values and physical property values for respective samples. In FIG. 8, the values of Samples 1 to 3 and the values of Samples 4 to 6 show a remarkable difference, and through this, it is clear to distinguish between a normal product and a defective product. On the other hand, FIG. 9 is a graph showing the result of measuring physical property values for respective samples. In FIG. 9, compared with Samples 1 to 3, no difference was observed in Sample 4, and Sample 6 showed similar values.

Therefore, it can be seen that if only the physical property values are compared, the determination as to whether the battery is defective or not is not accurate. In the present invention, in the step of measuring an eddy current signal, accurate welding quality is possible by measuring the physical properties of the welding portion and the portion spaced apart from the welding portion, and comparing the differences between them.

## Claims

1. A method of evaluating a resistance welding quality for a cylindrical battery including a case formed of aluminum or an alloy thereof and the cylindrical battery includes a welding portion, comprising:
measuring an eddy current signal along a line connecting an opposite end via a welding portion at one end of one plane including the welding portion, on the plane;
analyzing the measured eddy current signal; and
determining a resistance welding quality by comparing an eddy current signal value at the welding portion with an eddy current signal value at a point other than the welding portion,
wherein a peak value of the eddy current signal measured at a point other than the welding portion is set as a reference value, a minimum value of the eddy current signal measured at the welding portion is set as a physical property value, and
determining the resistance welding quality includes calculating a difference between the reference value and the physical property value, and determining the resistance welding as being defective when the calculated value is outside a preset range,
and wherein the reference value is an average value of respective peak values of the eddy current signal measured near both ends.

2. The method of claim 1, wherein the welding portion is a point where a battery tab is joined by resistance welding.

3. The method of claim 1, wherein:
the measuring the eddy current signal is performed on a plane of one end of the cylindrical battery to which the battery tab is welded.

4. The method of claim 1, wherein:
measuring the eddy current signal is performed on one plane where the battery tab is welded, and
a line connecting an opposite end through the welding portion at one end of the plane is a straight line passing through the welding portion or a curved line in which both sides are symmetrical with respect to the welding portion.

5. The method of claim 1, wherein the measuring the eddy current signal is performed continuously or intermittently along a line connecting an opposite end via the welding portion at one end of the plane.

6. The method of claim 5, wherein in the measuring the eddy current signal, both ends of the plane and the welding portion are included as a point to measure the eddy current signal.

7. The method of claim 1, wherein:
the measuring the eddy current signal is performed on a plane of one end where a battery tab has been welded in a cylindrical battery, and includes:
a first measuring step of being performed on a first line passing through the welding portion; and
a second measurement step of being performed on a second line that intersects the first line at the welding portion and does not overlap with the first line.

## Patentansprüche

1. Verfahren eines Evaluierens einer Widerstandsschweißqualität für eine zylindrische Batterie, umfassend ein aus Aluminium oder einer Legierung davon gebildetes Gehäuse und wobei die zylindrische Batterie einen Schweißabschnitt umfasst, umfassend:
Messen eines Wirbelstromsignals entlang einer Linie, welche ein entgegengesetztes Ende mittels eines Schweißabschnitts an einem Ende einer Ebene verbindet, welche den Schweißabschnitt umfasst, an der Ebene;
Analysieren des gemessenen Wirbelstromsignals; und
Bestimmen einer Widerstandsschweißqualität durch Vergleichen eines Wirbelstromsignalwertes an dem Schweißabschnitt mit einem Wirbelstromsignalwert an einem Punkt, welcher verschieden von dem Schweißabschnitt ist,
wobei ein Spitzenwert des an dem Punkt, welcher verschieden von dem Schweißabschnitt ist, gemessenen Wirbelstromsignals als ein Referenzwert festgelegt wird, und ein minimaler Wert des an dem Schweißabschnitt gemessenen Wirbelstromsignal als ein physikalischer Eigenschaftswert festgelegt wird, und
wobei das Bestimmen der Widerstandsschweißqualität ein Berechnen einer Differenz zwischen dem Referenzwert und dem physikalischen Eigenschaftswert sowie ein Bestimmen des Widerstandsschweißens als fehlerhaft umfasst, wenn der berechnete Wert außerhalb eines voreingestellten Bereichs liegt,
und wobei der Referenzwert ein Durchschnittswert jeweiliger Spitzenwerte des Wirbelstromsignals ist, welche in der Nähe beider Enden gemessen werden.

2. Verfahren nach Anspruch 1, wobei der Schweißabschnitt ein Punkt ist, an welchem eine Batteriezunge durch Widerstandsschweißen verbunden ist.

3. Verfahren nach Anspruch 1, wobei:
das Messen des Wirbelstromsignals an einer Ebene eines Endes der zylindrischen Batterie durchgeführt wird, an welches die Batteriezunge geschweißt ist.

4. Verfahren nach Anspruch 1, wobei:
ein Messen des Wirbelstromsignals an einer Ebene durchgeführt wird, an welche die Batteriezunge geschweißt ist, und
eine Linie, welche ein entgegengesetztes Ende durch den Schweißabschnitt an einem Ende der Ebene verbindet, eine gerade Linie, welche durch den Schweißabschnitt passiert, oder eine gebogene Linie ist, bei welcher beide Seiten in Bezug auf den Schweißabschnitt symmetrisch sind.

5. Verfahren nach Anspruch 1, wobei das Messen des Wirbelstromsignals kontinuierlich oder intermittierend entlang einer Linie durchgeführt wird, welche ein entgegengesetztes Ende mittels des Schweißabschnitts an einem Ende der Ebene verbindet.

6. Verfahren nach Anspruch 5, wobei, bei dem Messen des Wirbelstromsignals, beide Enden der Ebene und des Schweißabschnitts als ein Punkt umfasst sind, um das Wirbelstromsignal zu messen.

7. Verfahren nach Anspruch 1, wobei:
das Messen des Wirbelstromsignals an einer Ebene eines Endes durchgeführt wird, bei welchem eine Batteriezunge in eine zylindrische Batterie geschweißt worden ist und umfasst:
einen ersten Messschritt, welcher an einer ersten Linie durchgeführt wird, welche durch den Schweißabschnitt passiert; und
einen zweiten Messschritt, welcher an einer zweiten Linie durchgeführt wird, welche die erste Linie an dem Schweißabschnitt schneidet und nicht mit der ersten Linie überlappt.

## Revendications

1. Procédé d'évaluation d'une qualité de soudage par résistance pour une batterie cylindrique comportant un boîtier constitué d'aluminium ou d'un alliage de celui-ci et la batterie cylindrique comporte une partie de soudage, comprenant :
la mesure d'un signal de courant de Foucault le long d'une ligne reliant une extrémité opposée via une partie de soudage à une extrémité d'un plan comportant la partie de soudage, sur le plan ;
l'analyse du signal de courant de Foucault mesuré ; et
la détermination d'une qualité de soudage par résistance par comparaison d'une valeur de signal de courant de Foucault au niveau de la partie de soudage à une valeur de signal de courant de Foucault à un point autre que la partie de soudage,
dans lequel une valeur de crête du signal de courant de Foucault mesuré à un point autre que la partie de soudage est définie en tant que valeur de référence, une valeur minimale du signal de courant de Foucault mesuré au niveau de la partie de soudage est définie en tant que valeur de propriété physique, et
la détermination de la qualité de soudage par résistance inclut le calcul d'une différence entre la valeur de référence et la valeur de propriété physique, et le fait de déterminer que le soudage par résistance est défectueux lorsque la valeur calculée se trouve en dehors d'une plage prédéfinie,
et dans lequel la valeur de référence est une valeur moyenne de valeurs de crête respectives du signal de courant de Foucault mesuré à proximité des deux extrémités.

2. Procédé selon la revendication 1, dans lequel la partie de soudage est un point où une languette de batterie est assemblée par soudage par résistance.

3. Procédé selon la revendication 1, dans lequel :
la mesure du signal de courant de Foucault est réalisée sur un plan d'une extrémité de la batterie cylindrique sur laquelle la languette de batterie est soudée.

4. Procédé selon la revendication 1, dans lequel :
la mesure du signal de courant de Foucault est réalisée sur un plan où la languette de batterie est soudée, et
une ligne reliant une extrémité opposée via la partie de soudage à une extrémité du plan est une ligne droite passant par la partie de soudage ou une ligne courbe sur laquelle les deux côtés sont symétriques par rapport à la partie de soudage.

5. Procédé selon la revendication 1, dans lequel la mesure du signal de courant de Foucault est réalisée en continu ou par intermittence le long d'une ligne reliant une extrémité opposée via la partie de soudage à une extrémité du plan.

6. Procédé selon la revendication 5, dans lequel lors de la mesure du signal de courant de Foucault, les deux extrémités du plan et la partie de soudage sont incluses en tant que point pour mesurer le signal de courant de Foucault.

7. Procédé selon la revendication 1, dans lequel :
la mesure du signal de courant de Foucault est réalisée sur un plan d'une extrémité où une languette de batterie a été soudée dans une batterie cylindrique, et inclut :
une première étape de mesure réalisée sur une première ligne passant par la partie de soudage ; et
une deuxième étape de mesure réalisée sur une deuxième ligne qui coupe la première ligne au niveau de la partie de soudage et ne chevauche pas la première ligne.
